# EUROPÄISCHE PATENTSCHRIFT

(11) **EP 0 529 245 B1**
(45) Veröffentlichungstag und Bekanntmachung des Hinweises auf die Patenterteilung: **05.07.1995**
(21) Anmeldenummer: 92111380.9
(22) Anmeldetag: 04.07.1992
(51) Int. Cl.: F16D 65/097

(54) **Spreizfeder mit zusätzlichem Federarm für eine Scheibenbremse, insbesondere Festsattelbremse**
Spreading spring with auxiliary spring arm for a disc brake, especially fixed caliper brake
Ressort d'écartement avec bras ressort auxiliaire pour un frein à disque, spécialement frein à étrier fixe

(30) Priorität: 24.08.1991 DE 4128090
(43) Veröffentlichungstag der Anmeldung: 03.03.1993
(73) Patentinhaber: ITT Automotive Europe GmbH, 60488 Frankfurt (DE)
(72) Erfinder: Gerhard, Winfried, W-6000 Frankfurt/Main 90 (DE); Hennemann, Karl-Heinz, W-6380 Bad-Homburg (DE)

(56) Entgegenhaltungen:
- DE-A- 3 419 523
- DE-B- 1 625 828
- FR-A- 2 302 453
- GB-A- 2 004 958

## Beschreibung

Um vorzugsweise radial entnehmbare Bremsklötze, die in einem Schacht durch Stifte gehalten werden, gegenüber Geräuschen im Fahrbetrieb zu sichern, werden vielfach kreuzförmige Spreizfedern eingesetzt. So sind beispielsweise aus der DE-OS 34 19 523 für Schwimmsattelbremsen Spreizfedern bekannt. Entsprechendes gilt vermehrt für Festsattelbremsen, wie beispielsweise aus der DE-AS 16 25 828 ersichtlich ist. Derartige Spreizfedern haben vorzugsweise an ihrem axialen Schenkel am Ende einen Neigungswinkel, der sich gegenüber dem in axialer Richtung im Gehäuse verschiebbaren Bremsklotz abstützt. Die Aufgabe dieses Neigungswinkels besteht darin, eine in Axialrichtung wirkende Kraftkomponente der im wesentlichen radial wirkenden Feder zu schaffen, welche den innerhalb des Gehäuses verschiebbaren Bremsklotz versucht, gegen seine gehäuseseitige Anlage in axiale Richtung zu drängen. Das gilt in der Regel dann, wenn nach der Bremsenbetätigung die Bremsklötze von ihrer Bremsstellung an der Scheibe weg in ihre Ausgangslage befördert werden sollen, um unnötige Schleifbewegungen an der Scheibe, aber auch Kaltauswaschungen in deren Ruhezustand zu vermeiden.

Aus den beiden obengenannten Literaturstellen sind dementsprechend zumindest an einem Ende der Axialschenkel geneigte Abschnitte vorgesehen, die sich gegen einen oder beide gegenüberliegende Bremsklötze abstützen.

Wie aus der DE-AS 16 25 828 ersichtlich, liegt der tangential verlaufende Federschenkel symmetrisch zum Bremsengehäuse oberhalb der Bremsscheibe. Eine derartige Lage sorgt zwar für eine gute Verteilung der Kräfte, ist aber insofern nicht unbedenklich, als die üblichen Spreizfedern zumindest in axialer Richtung, weitgehend biegesteif sein sollen. Weiterhin wird eine erhebliche Steifigkeit hinsichtlich der tangentialen Federschenkel verlangt, wobei gleichzeitig die Stifte weitgehend umgriffen werden sollen, andererseits aber der Tangentialschenkel unter allen Umständen einen hinreichenden Abstand von der Bremsscheibe besitzen soll.

Da die Verbindungsstelle der Schenkel bei Abnutzung der Beläge aufgrund der Auflagewinkel an den Bremsklötzen sich hebt, weil die Rückenplatten bei abgeschliffenen Belägen sich einander nähern, versucht man, die unterhalb der Stifte greifenden Enden der Tangentialschenkel derart auszuformen, daß sie auch bei Änderung der Höhenlage der Verbindung zwischen den Schenkeln möglichst nicht um die Auflage an den Stiften geschwenkt werden. Das bedeutet, daß die Enden der Tangentialschenkel einen relativ breiten, nur schwach geneigten Bereich besitzen müssen, der beim Anheben der Verbindung unter den Stift weggleiten kann, ohne daß das gekrümmte und vergleichsweise steife Ende des Tangentialschenkels in Tangentialrichtung an dem Stift angreift und zu einem erheblichen Verschwenken der Schenkelenden radial nach unten zu führen, wodurch der untere Krümmungspunkt des Schenkelendes in Kontakt mit der Bremsscheibe treten könnte.

Als Ergebnis ist festzuhalten, daß die Spreizfeder üblicherweise mit ihren relativ steifen tangentialen Armen überwiegend nur in radialer Richtung an den Stiften angreift. Eine derartige Konstruktion kann nicht ausschließen, daß bei unebenem Gelände das System aus Feder, Stiften und Bremsklötzen in Relativbewegung gegenüber dem Gehäuse kommt. Infolge der notwendigen Toleranzen bei der Lagerung der Stifte innerhalb des Gehäuses kann dies zu Geräuschbildungen führen, die bei der zunehmenden Geräuscharmut moderner Fahrzeuge unangenehm auffallen können.

Aus der GB-A-2 004 958 ist eine andere Federanordnung bekannt, bei der zwei Blattfedern an den in Umfangsrichtung äußeren Wänden eines die Bremsklötze aufnehmenden Schachtes angeordnet sind. Zwar treten hier die o.g. Probleme einer Verschiebung der Federn bei zunehmendem Belagverschleiß und eine damit zusammenhängende Klapperneigung nicht auf, jedoch ist es aufwendiger zwei Federn ein- und auszubauen.

Die Erfindung geht daher aus von einer Scheibenbremse der sich aus dem Oberbegriff des Anspruchs 1 ergebenden Gattung und hat sich zur Aufgabe gestellt, eine derartige Bremse in ihrem Geräuschverhalten zu verbessern.

Diese Aufgabe wird durch die sich aus dem kennzeichnenden Teil des Hauptanspruchs ergebende Merkmalskombination gelöst. Die Erfindung besteht im Prinzip also darin, zusätzlich zu der durch die Tangentialschenkel ausgeübten, im wesentlichen radialen Kraft einen Federarm vorzusehen, der mit einer vorzugsweise von der Kraftrichtung des Tangentialschenkels abweichenden Kraftrichtung den Stift auch bei Schüttelbewegungen des Bremsengehäuses in ständigem Eingriff mit den Lagerwänden im Gehäuse hält und so auch bei außerordentlichen Umständen ein Klappergeräusch des Systems verhindert. Da die Tangentialarme relativ steif sind, wird mit Vorteil der zusätzliche Federarm auf einfache Weise aus der Spreizfeder herausgeformt und mit dieser als eine Einheit ausgebildet. Dies kann durch einen einfachen Schneidevorgang geschehen, der den Federarm aus dem Tangentialschenkel herausformt. Selbstverständlich wird man den zusätzlichen Federarm symmetrisch an beiden Enden des Tangentialschenkels vorteilhaft einsetzen können, ohne den Rahmen der Erfindung zu verlassen.

Insbesondere wenn, wie bei Festsattelbremsen, die Spreizfeder mittig zur Tangentialachse liegt, empfiehlt sich die Anwendung der Merkmale nach Anspruch 2. Hierbei wird der als Zunge ausgeschnittene zusätzliche Federarm in Tangentialrichtung mittig auf dem Tangentialschenkel angeordnet, so daß seitlich der Zunge zwei kräftige Schenkelfinger verlaufen. Aus Platzersparnisgründen und auch wegen der vereinfachten Gestaltung empfehlen sich die Merkmale nach Anspruch 3. Zusätzlich kann man gemäß Anspruch 4 in den Verlauf der Zunge eine oder mehrere Falten einfügen, so daß die Zunge in ihrer Längsrichtung ohne größeren Widerstand ziehharmonikaförmig herausziehbar ist, so daß hier unschwer ein Längenausgleich zum Ausgleich von Toleranzen oder der Änderung des Verbindungspunktes zwischen den Schenkeln herbeigeführt werden kann. Selbstverständlich erfolgt diese Auszugbewegung elastisch, so daß hierdurch die erwünschte, im wesentlichen in Radialrichtung verlaufende Komponente gegenüber den Stiften nicht verloren geht.

Um eine hinreichende radiale Komponente zu erreichen, wird die Anwendung der Merkmale nach Anspruch 5 vorgeschlagen. Dabei kann in Fortbildung der Erfindung mit Anspruch 5 oder 6 die Umschlingung oberhalb oder unterhalb des Stiftes durch die Zunge erfolgen, so daß die umschlingende Fläche der Zunge der Angriffsebene des Tangentialschenkels gegenüberliegt oder weitgehend in einer Ebene liegt.

Sehr wichtig für die Erfindung ist es, daß durch die Ausgestaltung der Zunge, insbesondere ihrer Breite, ein gegenüber dem Tangentialschenkel stark abgeändertes elastisches Verhalten erreicht werden kann. Während also der Tangentialschenkel weitgehend steif ist, ermöglicht die Zunge eine vergleichsweise elastische Formänderung, so daß sie auch bei Schüttelbewegungen des Gehäuses nicht außer Eingriff mit dem zugehörigen Stift kommen kann und somit für eine dauerhafte Anlage des Stiftes an seinen Lagerflächen sorgt. Geeignete Maßnahmen hierzu werden in Anspruch 7 vorgeschlagen.

Während nun der Tangentialschenkel, wie eingangs schon erläutert, im wesentlichen in radialer Richtung auf den Stift einwirkt, wird durch den Federarm bzw. die Zunge eine beachtliche Kraft in tangentialer Richtung erzeugt. Hierzu dient insbesondere die Anwendung der Merkmale nach Anspuch 8.

Ein Ausführungsbeispiel der Erfindung wird nachfolgend anhand der Zeichnung erläutert.

Darin zeigt
- Fig. 1 und 2: in teilweise geschnittener und auszugsweiser Darstellung einen in bekannter Weise an einem Stift angreifenden Tangentialschenkel,
- Fig. 3 - 5: eine gemäß der Erfindung abgeänderte erste Ausführungsform der Konstruktion nach den Fig. 1 und 2,
- Fig. 6 und 7: eine gemäß der Erfindung abgeänderte zweite Ausführungsform der Konstruktion nach Fig. 1 und 2,
- Fig. 8 bis 13: weitere abgeänderte Ausführungsformen der Erfindung.

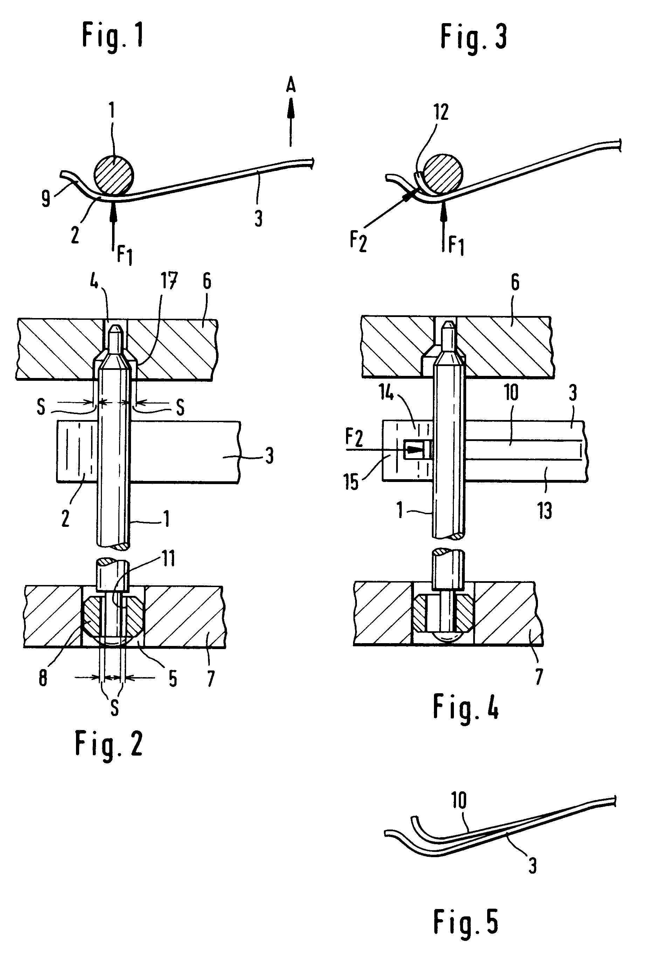

Fig. 1 zeigt einen Stift 1, der von dem Ende 2 eines abgebrochen dargestellten Tangentialschenkels 3 einer Spreizfeder in der radialen Richtung von der Kraft F1 beaufschlagt wird. Der Stift 1 ist, wie aus Fig. 2 ersichtlich, mit seinen Enden in entsprechenden Öffnungen 4,5 gelagert, die in Gehäuseteile 6,7 des Bremsengehäuses eingefügt sind. Um Temperatur- und Fertigungsunterschiede auszugleichen, sind notwendigerweise an beiden Öffnungen gegenüber dem Stift 1 Toleranzen S vorgesehen, innerhalb derer sich der Stift mit seinen Enden in der Öffnung 4, 5 bewegen kann.

Dabei ist das in Fig. 2 untere Ende in einer Spannhülse 8 gesichert, die aber ebenfalls gegenüber dem Stift 1 Toleranzen besitzt.

Da das Federende 2 ebenso wie der restliche Teil des Tangentialschenkels 3 vergleichsweise steif ist, kann bei schnellen und heftigen Schüttelbewegungen des Gehäuses der Stift 1 gegen die Wände 17 der Öffnung 4 im Gehäuseteil 6 oder die Wände 11 der Spannhülse 8 schlagen. Das gilt insbesondere für Gehäusebewegungen in tangentialer Richtung.

Aus der bekannten Konstruktion ist auch ersichtlich, daß bei einem hinreichenden Anheben des in Fig. 1 rechten Teils des abgebrochen dargestellten Tangentialschenkels 3 um einen hinreichend großen Betrag in Richtung des Pfeiles A das in Fig. 1 linke äußere Ende 9 des Tangentialschenkels 3 an die Stelle des in Fig. 1 eingezeichneten Kraftangriffspunkt F1 unter den Stift 1 wandert, so daß der bei dem Bezugszeichen 2 eingezeichnete Federbogen in Fig. 1 schräg nach unten wandert und hierdurch in Kontakt mit der Bremsscheibe treten kann. Man ist deshalb bemüht, die Umschlingung am äußeren Ende 9 in einem hinreichenden Abstand zum Umfang des Stiftes 1 zu halten, obwohl aus optischen als auch aus praktischen und räumlichen Gründen eine engere Umschlingung erwünscht wäre.

Fig. 3 und 4 zeigen nun die Wirkung einer in den Tangentialschenkel 3 eingefügten Zunge 10, die mit ihrem gekrümmten Zungenende 12 in Richtung der Kraft F2 an dem Stift 1 eingreift. Diese Kraft F2 wirkt aufgrund der vergleichsweise schmalen Ausgestaltung der Zunge 10 recht elastisch und vermag durch eine entsprechende Verformung bei einem Anheben des Tangentialschenkels 3 in Richtung A (s. Fig. 1) dem Stift 1 um einen gewissen Betrag auszuweichen, so daß ein Auswandern der Krümmung 2, wie weiter oben beschrieben, nicht befürchtet werden muß.

Durch diese Maßnahme wird der Stift 1 im stetigen Eingriff mit den Lagerwänden 11, 17 in den Gehäuseteilen 6 und 7 gehalten.

Fig. 5 zeigt in skizzierter Form bei entspannter Spreizfeder die Lage der Zunge 10 gegenüber dem Tangentialschenkel 3, bei dem die Zunge 10 in radialer Richtung nach oben ragt.

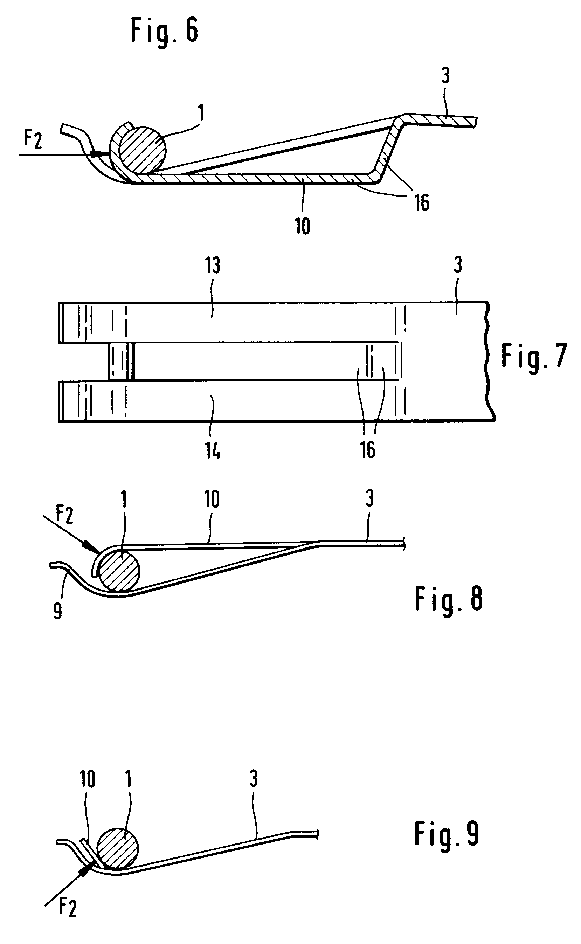

Fig. 6 und 7 zeigen in Weiterbildung der Erfindung die Möglichkeit, hinsichtlich der Zunge 10 durch eine Ausknickung 16 einen Längenausgleich in tangentialer Richtung vorzusehen, so daß die Zunge 10 einer relativen Tangentialbewegung des Stiftes 1 elastisch zu folgen vermag. Die Zunge 10 ist, wie bei dem vorangegangenen Ausführungsbeispiel in die Mitte zwischen die seitlichen Finger 13,14 des Tangentialschenkels 3 gelegt, so daß auch in axialer Richtung die Kräfte gleichmäßig an dem Stift 1 verteilt sind und symmetrisch wirken. Im Unterschied zu Fig. 4 wurde gemäß Fig. 7 am Ende der Finger 13,14 auf den in Fig. 4 vorgesehenen Verbindungssteg 15 verzichtet. Der Verbindungssteg 15 schafft eine größere Steifigkeit zwischen den Fingern 13 und 14 des Tangentialschenkels 3, ist aber nicht zwingend notwendig.

Fig. 8 zeigt eine gegenüber den vorangegangenen Figuren abgeänderte Ausgestaltung der Zunge 10, die nunmehr über den Stift 1 greift und somit für eine in Fig. 8 schräg nach rechts unten gerichtete Kraft F2 sorgt. Durch eine entsprechende Ausformung der Zunge 10 kann diese auch derart an dem Stift 1 anliegen, daß eine in Fig. 8 schräg nach links unten, senkrecht zu F2 stehende Kraft erzeugt wird, die neben einer tangential nach außen gerichteten Komponente eine nach unten gerichtete Komponente aufweist.

Fig. 9 zeigt eine weitere Abänderung in der Gestaltung der Zunge 10, bei der diese nicht mit einer gekrümmten, sondern mit einer ebenen Fläche an dem Stift 1 anliegt, was unter bestimmten Bedingungen ebenfalls Vorteile birgt.

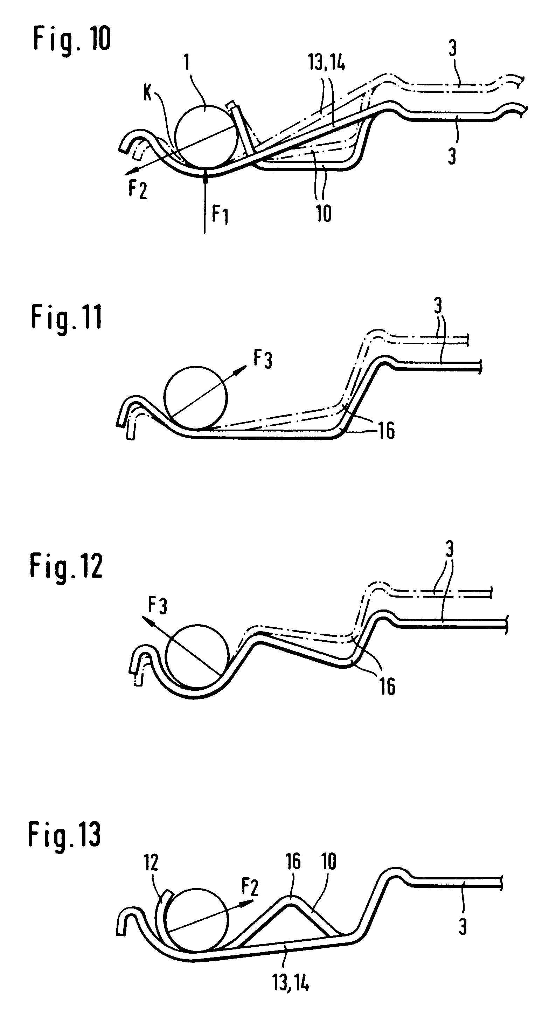

In Fig. 10 ist dargestellt, wie durch eine entsprechende Ausgestaltung des Tangentialschenkels 3 bzw. der Finger 13 und der Zunge 10 eine von der Symmetrieebene der Bremse weggerichtete Kraft F2 durch die Zunge 10 erzeugt werden kann. Dabei ist zum einen die Lage des Tangentialschenkels 3 bei neuen Bremsbelägen und in gestrichelter Darstellung die Lage des Tangentialschenkels 3 bei abgenutzten Bremsbelägen und damit angehobener Stellung gezeigt.

Wichtig für die Funktion der Erfindung ist es, daß das äußere Ende der Finger 13 auch bei gestrichelt gezeigter angehobener Lage nicht an dem Stift 1 angreift und somit eine der Kraft F2 im wesentlichen entgegengerichtete Kraft erzeugt, sondern daß auch bei der angehobenen Lage des Tangentialschenkels 3 ein Spalt K zwischen dem äußeren Bereich des Fingers 13 und der Umfangsfläche des Stiftes 1 bleibt. Das ändert nichts daran, daß in beiden Lagen des Tangentialschenkels 3 eine Kraft F1 ständig radial nach oben einwirkt.

Fig. 13 zeigt die Ausgangslage eines Tangentialschenkels 3 mit einer nach oben gerichteten Ausknickung 16 der Zunge 10, deren Endbereich derart ausgeformt ist, daß unabhängig von der Lage des Tangentialschenkels 3 ständig eine zur Bremsenmitte hin gerichtete Kraft F2 durch die Zunge 10 erzeugt wird.

## Patentansprüche

1. Scheibenbremse mit einer als Blattfeder ausgestalteten, mit gekreuzten Schenkeln versehenen Spreizfeder, deren Axialschenkel zumindest an seinem einen Ende auf einen der Bremsklötze einwirkt und deren Tangentialschenkel (3) sich zumindest an einem mit dem Bremsengehäuse (6,7) verbundenen Stift (1) abstützt, dadurch **gekennzeichnet**, daß an einer tangentialen Bremsenseite in Höhe des Stiftes durch eine im wesentlichen tangential verlaufende Trennfuge eine zusätzliche Zunge (10) am Tangentialschenkel (3) ausgebildet ist, die mit ihrem zum Axialschenkel weisenden Ende an den Tangentialschenkel (3) gefesselt ist und mit ihrem freien Ende (12) auf den Stift (1) einwirkt, so daß der Stift (1) unabhängig von einer radialen Lageänderung der Verbindungsstelle der Federschenkel bei im Bremsenbetrieb auftretenden Erschütterungen in ständiger Anlage zu den Lagerwänden (11,17) des Stiftes (1) im Gehäuse gehalten ist.

2. Scheibenbremse nach Anspruch 1, dadurch **gekennzeichnet**, daß die Zunge (10) symmetrisch zur Mittelebene des Tangentialschenkels (3) liegt und vorzugsweise zu dieser in einer wenig abweichenden Richtung läuft.

3. Scheibenbremse nach Anspruch 1 oder 2, dadurch **gekennzeichnet**, daß die Zunge (10) mit ihrem radial gebogenen, in etwa in Richtung zu der Mittelebene der Bremse vorgespannten Ende (9) den Stift (1) umfaßt.

4. Scheibenbremse nach einem der Ansprüche 1 bis 3, dadurch **gekennzeichnet**, daß die Zunge (10) dem verbleibenden Teil des Tangentialschenkels (3) über eine Ausknickung (16) folgt.

5. Scheibenbremse nach einem der Ansprüche 1 bis 4, dadurch **gekennzeichnet**, daß die Zunge (10) den Stift (1) von der Wirkungsebene des Tangentialschenkels (3) auf den Stift (1) her kreissektorförmig umschließt.

6. Scheibenbremse nach einem der Ansprüche 1 bis 4, dadurch **gekennzeichnet**, daß die Zunge (10) den Stift (1) von einer der Wirkungsebene des Tangentialschenkels (3) gegenüber dem Stift (1) gegenüberliegenden Ebene aus umschlingt.

7. Scheibenbremse nach einem der Ansprüche 1 bis 6, dadurch **gekennzeichnet**, daß die Zunge (10) so schmal ist, daß sie eine erheblich größere Elastizität als der verbleibende Tangentialschenkel (3) in diesem Bereich besitzt.

8. Scheibenbremse nach einem der Ansprüche 1 bis 7, dadurch **gekennzeichnet**, daß die Zunge (10) mit einem mindestens 55° von der von dem Tangentialschenkel (3) ausgeübten Kraft (F1) abweichenden Kraft (F2) an dem Stift (1) angreift.

9. Scheibenbremse nach einem der Ansprüche 1 bis 8, dadurch **gekennzeichnet**, daß die Zunge (10) auf den Stift (1) mit einer im wesentlichen zur Symmetrieebene der Bremse hin gerichteten Kraft (F2) einwirkt.

10. Scheibenbremse nach einem der Ansprüche 1 bis 8, dadurch **gekennzeichnet**, daß die Zunge (10) auf den Stift (1) mit einer im wesentlichen von der Symmetrieebene der Bremse weggerichteten Kraft (F2) einwirkt.

## Claims

1. A disc brake brake comprising an expanding spring configured as a leaf spring and having crossed legs, the axial leg of which acts on one of the brake shoes at least at its one end and the tangential leg (3) of which takes support at least at a pin (1) being coupled to the brake housing (6, 7),
**characterized** in that, at a tangential side of the brake at the level of the pin, an additional tongue (10) is provided at the tangential leg (3) by way of a partition line extending in a substantially tangential direction, and being captivated to the tangential leg (3) with its end pointing to the axial leg, and with its free end (12) acts on the pin (1) in such a manner that the pin (1) is maintained in constant abutment with the supporting walls (11, 17) of the pin (1) within the housing independently of a radial change in position of the connecting point of the spring legs in the event of vibrations occurring during the operation of the brake.

2. A disc brake as claimed in claim 1,
**characterized** in that the tongue (10) is positioned symmetrically with respect to the centre plane of the tangential leg (3), and in that it extends preferably in a direction which differs only little from the plane.

3. A disc brake as claimed in claim 1 or in claim 2,
**characterized** in that the tongue (10) makes grip around the pin (1) with its radially curved end (9) being prestressed roughly in the direction of the centre plane of the brake.

4. A disc brake as claimed in anyone of claims 1 to 3,
**characterized** in that the tongue (10) follows the remaining part of the tangential leg (3) over a bent course (16).

5. A disc brake as claimed in anyone of claims 1 to 4,
**characterized** in that the tongue (10) surrounds the pin (1) in a circular-sector shape from the effective plane of the tangential leg (3) toward the pin (1).

6. A disc brake as claimed in anyone of claims 1 to 4,
**characterized** in that the tongue (10) clasps the pin (1) in the shape of a circle sector from a plane which is positioned opposite the effective plane of the tangential leg (3) with respect to the pin (1).

7. A disc brake as claimed in anyone of claims 1 to 6,
**characterized** in that the tongue (10) is so narrow that it has a considerably greater elasticity than the remaining tangential leg (3) in this range.

8. A disc brake as claimed in anyone of claims 1 to 7,
**characterized** in that the tongue (10) makes catch at the pin (1) with a force (F2) which differs by at least 55 degrees from the force (F1) which is exerted by the tangential leg (3).

9. A disc brake as claimed in anyone of claims 1 to 8,
**characterized** in that the tongue (10) acts upon the pin (1) with a force (F2) which is substantially directed toward the plane of symmetry of the brake.

10. A disc brake as claimed in anyone of claims 1 to 8,
**characterized** in that the tongue (10) acts upon the pin (1) with a force (F2) which is substantially directed away from the plane of symmetry of the brake.

## Revendications

1. Frein à disque comprenant un ressort d'écartement qui est réalisé sous la forme d'un ressort à lame et comporte des branches en croix et dont, au moins à l'une de ses extrémités, la branche axiale exerce une action sur l'une des plaquettes de frein, tandis que la branche tangentielle (3) de ce ressort prend appui au moins sur une tige (1) reliée au boîtier de frein (6, 7), caractérisé en ce que, sur une face tangentielle du frein, au niveau de la tige et passant par un plan de joint qui s'étend d'une manière pratiquement tangentielle, il est réalisé sur la branche tangentielle (3) une languette supplémentaire (10) qui, par son extrémité tournée vers la branche axiale, est solidaire de la branche tangentielle (3) et qui , par son extrémité libre (12), exerce une action sur la tige (1), de sorte qu'indépendamment d'un changement de position radiale de la zone de liaison des branches du ressort, la tige (1) est maintenue en appui permanent vis-à-vis des parois (11, 17) du boîtier qui forment un palier pour la tige (1), lorsque des vibrations sont produites pendant le fonctionnement du frein.

2. Frein à disque selon la revendication 1, caractérisé en ce que la languette (10) est disposée d'une manière symétrique vis-à-vis du plan central de la branche tangentielle (3) et s'étend de préférence suivant une direction s'écartant peu de ce plan.

3. Frein à disque selon la revendication 1 ou 2, caractérisé en ce que la languette (10) entoure la tige (1) par son extrémité (9) qui est courbée dans le sens radial et est soumise à une précontrainte approximativement en direction du plan central du frein.

4. Frein à disque selon l'une des revendications 1 à 3, caractérisé en ce que la languette (10) est située à la suite de la partie restante de la branche tangentielle (3) par l'intermédiaire d'une partie (16) formant une inflexion.

5. Frein à disque selon l'une des revendications 1 à 4, caractérisé en ce que la languette (10) entoure la tige (1) suivant la forme d'un arc de cercle à partir du plan d'action de la branche tangentielle (3) sur la tige (1).

6. Frein à disque selon l'une des revendications 1 à 4, caractérisé en ce que la languette (10) enveloppe la tige (1) à partir d'un plan qui est situé à l'opposé du plan d'action de la branche tangentielle (3) vis-à-vis de la tige (1).

7. Frein à disque selon l'une des revendications 1 à 6, caractérisé en ce que le languette (10) est si étroite qu'elle possède une élasticité considérablement plus grande que le reste de la branche tangentielle (3) dans cette zone.

8. Frein à disque selon l'une des revendications 1 à 7, caractérisé en ce que la languette (10) vient en prise sur la tige (1) avec une force (F2) qui s'écarte d'au moins 55° de la force (F1) exercée par la branche tangentielle (3).

9. Frein à disque selon l'une des revendications 1 à 8, caractérisé en ce que la languette (10) exerce une action sur la tige (1) avec une force (F2) dirigée pratiquement vers le plan de symétrie du frein.

10. Frein à disque selon l'une des revendications 1 à 8, caractérisé en ce que la languette (10) exerce une action sur la tige (1) avec une force (F2) qui s'éloigne notablement du plan de symétrie du frein.
